# EUROPÄISCHE PATENTSCHRIFT

(11) **EP 0 879 560 B1**
(45) Veröffentlichungstag und Bekanntmachung des Hinweises auf die Patenterteilung: **04.12.2002**
(21) Anmeldenummer: 98108590.5
(22) Anmeldetag: 12.05.1998
(51) Int. Cl.: A22C 13/00

(54) **Mehrschichtige, biaxial verstreckte Nahrungsmittelhülle mit zwei Sauerstoff-Barriereschichten**
Multilayered, biaxially oriented food casing comprising two oxygen barrier layers
Enveloppe multicouche orienté biaxialement pour aliments contenant deux couches barrières à l'oxygène

(30) Priorität: 21.05.1997 DE 19721142
(43) Veröffentlichungstag der Anmeldung: 25.11.1998
(73) Patentinhaber: Kalle Nalo GmbH & Co. KG, 65203 Wiesbaden (DE)
(72) Erfinder: Delius, Ulrich, Dr. Dipl.-Chem., 60529 Frankfurt (DE); Stenger, Karl, Dipl.-Ing., 65385 Rüdesheim (DE); Grolig, Gerhard, Dr. Dipl.-Chem., 64546 Mörfelden-Walldorf (DE)
(74) Vertreter: Plate, Jürgen, Dr.

(56) Entgegenhaltungen:
- EP-A- 0 065 278
- EP-A- 0 467 039
- EP-A- 0 589 431
- EP-A- 0 589 436
- EP-A- 0 603 676
- EP-A- 0 658 310
- DE-A- 4 339 337
- DE-A- 19 529 603

## Beschreibung

Die Erfindung betrifft eine mehrschichtige, biaxial verstreckte Nahrungsmittelhülle aus thermoplastischen Kunststoffen sowie ein Verfahren zu ihrer Herstellung.

Nahrungsmittelhüllen der eingangs genannten Art werden insbesondere zur Herstellung von Koch- und Brühwurst verwendet. Allgemein wird eine möglichst lange Lagerfähigkeit der Wurst angestrebt. Dafür wurden Hüllen entwickelt, die eine verminderte Durchlässigkeit für Wasserdampf und/oder Sauerstoff besitzen. Durch die Wasserdampfbarriere wird ein Austrocknen während der Lagerung und durch die Sauerstoffbarriere eine Oxidation des Wurstbräts verhindert. Eine zunehmende Graufärbung der Brätoberfläche weist auf eine Oxidation hin, die das allmähliche Verderben der Wurst bewirkt.

Würste, die länger als drei Monate gelagert werden sollen, müssen nach dem Abfüllen sterilisiert werden. Üblicherweise wird diese Sterilisation im Dampfautoklaven bei einer Temperatur von etwa 115 bis 130 °C durchgeführt. Auch bei Wursthüllen mit erhöhter Sauerstoffbarriere ist eine Sterilisation erforderlich, denn neben aeroben können auch anaerobe Keime zum Verderb führen. Der Zutritt von Luftsauerstoff kann durch die Sterilisation natürlich nicht vermindert werden.

Aus Vinylidenchlorid-Copolymeren lässt sich eine Einschichthülle mit guter Wasserdampf- und Sauerstoffbarriere herstellen. Diese speziellen VDC-Copolymere sind jedoch kostspielig und aufgrund ihres Chlorgehalts wenig umweltverträglich. Deshalb wurden chlorfreie, mehrschichtige Nahrungsmittelhüllen entwickelt, in denen jeweils mindestens eine Polymerschicht für die Wasserdampf- bzw. Sauerstoffbarriere sorgt. Diese Hüllen werden allgemein durch Coextrusion hergestellt. So ist in der EP-A 0 467 039 eine schlauchförmige Hülle offenbart, die aus einer äußeren Schicht aus aliphatischem Polyamid, einer zentralen Schicht aus Polyolefin und einer haftvermittelnden Komponente und einer inneren Schicht aus aliphatischen und/oder teilaromatischen (Co-)Polyamiden besteht. Für Wurstwaren, die über einen längeren Zeitraum gelagert werden sollen, ist jedoch die Sauerstoffsperre selbst dieser Hülle nicht ausreichend.

Biaxial verstreckte Schlauchfolien mit einer äußeren Schicht aus aliphatischem Polyamid, einer zentralen Sauerstoff-Sperrschicht aus einem EthylenNinylalkohol-Copolymer (EVOH) oder aus (teil-)aromatischem Copolyamid und einer inneren Schicht aus olefinischen (Co-)Polymeren sind in der EP-A 0 530 539 beschrieben. Die polyolefinische Innenschicht führt jedoch zu einer ungenügenden Haftung der Hülle am Wurstbrät. Um diese Haftung zu verbessern, können für die Innenschicht Polyolefine verwendet werden, die mit polaren Gruppen modifiziert sind. Es ist auch möglich, die Polyolefine mit polaren (Co-)Polymeren abzumischen. All diese Maßnahmen haben jedoch den Nachteil, dass sie die Wasserdampfbarriere der Innenschicht vermindern. Eine Corona-Behandlung der olefinischen Innenschicht führt ebenfalls zu einer verbesserten Bräthaftung, ist allerdings technisch sehr aufwendig. Ein weiterer Nachteil der Schlauchfolien gemäß der EP-A 0 530 539 besteht darin, dass die äußere Polyamidschicht wasserdampfdurchlässig ist, so dass die zentrale EVOH-Schicht Feuchtigkeit aufnehmen kann. Es ist allgemein bekannt, dass die Sauerstoffpermeation der EVOH-Schicht um das Fünfhundert- bis Tausendfache zunimmt, wenn die relative Feuchte von 0 auf 100 % ansteigt (s. J. Rellmann, H. Schenck in: Kunststoffe 82 [1992] 731). Bei längerer Lagerung, insbesondere in feuchter Umgebung, ist die Sauerstoffbarriere dieser Hülle daher kaum größer als die einer einschichtigen Polyamidhülle. Besteht die zentrale Schicht aus dem (teil-)aromatischen Copolyamid (z.B.

Poly[*meta*-Xylylen-adipamid] = Nylon MXD6), so bleibt deren Sauerstoff-Sperrwirkung bei Erhöhung der relativen Feuchte von 0 auf 100 % zwar weitgehend erhalten; die Sperrwirkung ist jedoch in jedem Fall zu gering. Eine Schicht aus Nylon MXD6 lässt immer noch ein Zehntel des Sauerstoffvolumens passieren, das durch eine entsprechenden Schicht aus Polyamid-6 dringt. Um eine Oxidation bei mehrmonatiger Lagerung zu verhindern, ist diese Sauerstoffsperre nicht ausreichend.

In der EP-A 0 530 549 ist ebenfalls eine dreischichtige Hülle mit einer zentralen EVOH-Schicht offenbart. Die äußere Schicht besteht hier aus olefinischen (Co-)Polymeren, während die innere aus aliphatischem Polyamid gebildet wird. Auch diese Hülle besitzt keine langanhaltende Sauerstoffsperre, wenn sie mit Brät gefüllt ist. Die in dem Brät reichlich vorhandene Feuchtigkeit wandert langsam durch die innere Polyamidschicht in die zentrale EVOH-Schicht und vermindert stark deren Sauerstoff-Sperrwirkung.

Um diese Mängel zu beseitigen, wurden Hüllen mit noch mehr Schichten entwickelt. So ist in der EP-A 0 603 676 eine biaxial verstreckte, fünfschichtige Schlauchfolie beschrieben. Die Schichtabfolge in dieser Hülle ist symmetrisch. Beiderseits angrenzend an eine zentrale EVOH-Schicht befinden sich Schichten aus Polyolefin, auf die wiederum jeweils eine Schicht aus aliphatischem Polyamid folgt. Durch die polyolefinischen Zwischenschichten ist die zentrale Schicht weitgehend vor Feuchtigkeit geschützt. Gegen den bei der Sterilisierung verwendeten Heißdampf reicht die Schutzwirkung der Zwischenschichten jedoch nicht aus (siehe B.C. Tsai und J.A. Wachtel in ACS Symp. Ser. 423 [1990] 198). Nach der Sterilisierung diffundiert die Feuchtigkeit zwar langsam wieder aus der Hülle, es bleibt jedoch eine Restfeuchte in der zentralen Schicht zurück, die die Sauerstoffbarriere stark vermindert.

In der DE-A 195 29 603 wie auch in der EP-A 658 310 ist eine mindestens vierschichtig coextrudierte, biaxial verstreckte, schlauchförmige, nahtlose Wursthülle offenbart. Die Hülle umfaßt jeweils eine Schicht überwiegend aus aliphatischem Polyamid auf der Innen- und Außenseite und dazwischen mindestens eine wasserdampfsperrende, polyolefinische Schicht und mindestens eine sauerstoffsperrende Schicht aus EVOH. Gemäß der EP-A 658 310 enthält mindestens eine der Schichten feinstteilige, anorganische Pigmente mit einer mittleren Korngröße von 0,01 bis 5 um und mindestens eine der Polyamidschichten1 bis 15 Gew.-% an teilaromatischem Copolyamid.

Bis heute gibt es keine chlorfreie, schlauchförmige Nahrungsmittelhülle auf Polymerbasis, die eine hohe und unter allen Praxisbedingungen bleibende Sauerstoffbarriere besitzt.

Es bestand daher die Aufgabe, eine Nahrungsmittelhülle mit einer hohen Wasserdampf- und Sauerstoffbarriere zur Verfügung zu stellen, die sich mit Heißdampf sterilisieren lässt, ohne dass dabei die Sauerstoffdurchlässigkeit wesentlich zunimmt.

Gelöst wird die Aufgabe mit einer mindestens vierschichtigen, schlauchförmigen, biaxial verstreckten Nahrungsmittelhülle, die die Merkmale des Anspruchs 1 aufweist.

Der Anteil an aliphatischem (Co-)Polyamid in der äußeren Schicht liegt bevorzugt bei 40 bis 95 Gew.-%, besonders bevorzugt 60 bis 90 Gew.-%, jeweils bezogen auf das Gesamtgewicht der Schicht. Bevorzugte aliphatische (Co-)-Polyamide sind Polyamid-6 und Polyamid-6/66. Bevorzugte teilaromatische (Co-)Polyamide sind Poly(*meta*-xylylen-adipamid) und Polyamid-6I/6T. Besonders bevorzugt besteht die äußere Schicht aus einer Mischung (Blend) aus 60 bis 90 Gew.-% Polyamid-6 und/oder Polyamid-6/66 und 40 bis 10 Gew.-% Nylon-MXD6. Durch den Anteil an teilaromatischem (Co-)Polyamid ist die Sauerstoffdurchlässigkeit der äußeren Schicht deutlich vermindert. Die Sauerstoffdurchlässigkeit nimmt dabei sogar noch weiter ab, wenn die Hülle Feuchtigkeit ausgesetzt oder mit Heißdampf sterilisiert wird.

Die Schicht kann darüber hinaus noch allgemein übliche Zusätze, insbesondere Pigmente, enthalten. Mit den Pigmenten lässt sich die Schicht einfärben. Pigmente können auch die Neigung zum Blocken vermindern. Die Dicke der äußeren Schicht liegt allgemein bei 12 bis 30 µm, bevorzugt bei 15 bis 25 µm.

Das Ethylen/Vinylalkohol-Copolymer (EVOH) der zentralen Schicht b) besteht bevorzugt aus 29 bis 47 mol-% Ethylen-Einheiten und 71 bis 53 mol-% Vinylalkohol-Einheiten. Neben 30 bis 90 Gew.-% EVOH enthält die Schicht bevorzugt 70 bis 10 Gew.-% mindestens eines aliphatischen und/oder eines teilaromatischen (Co-)Polyamids. Geeignete Copolyamide sind beispielsweise Polyamid-6/69, Polyamid-6/12 und Polyamid-6I/6T. Geeignete olefinische Copolymere sind beispielsweise Ethylen/Acrylsäure- oder Ethylen/Methacrylsäure-Copolymere. Werden die Wasserstoffatome in einer mehr oder weniger großen Anteil der Carboxygruppen dieser Copolymere durch Metallkationen (beispielsweise Na⁺ oder 1/2 Zn²⁺) ersetzt, so gelangt man zu geeigneten lonomerharzen. Das EVOH verleiht der Schicht b) eine stark sauerstoffsperrende Wirkung. Die genannten (Co-)Polyamide und/oder olefinischen (Co-)Polymere setzen die Sauerstoffsperre nicht oder nur unwesentlich herab, bewirken daneben jedoch eine verbesserte Geschmeidigkeit der Schicht. Eine Schicht aus reinem EVOH ist dagegen relativ steif, steifer noch als jede der Schichten a), c) und d). So hat ein EVOH mit einem Anteil von 32 mol-% an Ethylen-Einheiten einen Zugelastizitätsmodul (Zug-E-Modul) von etwa 3.800 N/mm², während feuchtes Polyamid-6 ein Zugelastizitätsmodul von etwa 700 hat, also einer mechanischen Verdehnung viel weniger Widerstand entgegensetzt. Eine verbesserte Geschmeidigkeit der Schicht b) führt dazu, dass die Hülle dehnbar wird und sich damit besser füllen lässt. Gleichzeitig sorgt sie dafür, dass beim Füllen oder Brühen der Wurst keine Risse in der Schicht entstehen. Solche Risse würden die Barrierewirkung stark beeinträchtigen. Die Schicht b) hat allgemein eine Dicke von 3 bis 15 um, bevorzugt von 6 bis 12 µm.

Die polyolefinische Schicht c) besteht bevorzugt aus Polyethylen, Ethylen-α-Olefin-Copolymeren, Polypropylen und/oder Ethylen/Propylen-Copolymeren. Die Polyolefine können mit funktionellen Gruppen modifiziert sein. Sie wirken dann haftvermittelnd zwischen EVOH und Polyamid. Das gleiche Resultat wird erreicht, wenn ein Haftvermittler mit den Polyolefinen vermischt wird. Die Haftvermittler sind in der Regel organische Polymere. Sie können daher auch eine eigene Schicht auf einer oder auf beiden Seiten der polyolefinischen Schicht c) bilden. Die Schicht c) kann darüber hinaus noch Farbpigmente und/oder organische oder anorganische UV-Absorber enthalten. Ist nur eine Schicht c) vorhanden, so ist sie im allgemeinen zwischen den Schichten b) und d) angeordnet. Bei zwei Schichten c) befindet sich jeweils eine zwischen der Schicht b) und der äußeren Schicht a) bzw. der inneren Schicht d). Bei einer fünfschichtigen Hülle ist die Abfolge der einzelnen Schichten vorzugsweise a) - c) - b) - c) - d). Die Dicke der (jeweiligen) olefinischen Schicht(en) liegt bei 5 bis 20 µm, bevorzugt bei 8 bis 12 um.

Geeignete aliphatische Polyamide für die innere Schicht d) sind beispielsweise Polyamid-6/69. Die Dicke der Schicht d) liegt allgemein bei 4 bis 15 µm, bevorzugt bei 5 bis 10 µm.

Die Herstellung der erfindungsgemäßen Nahrungsmittelhüllen kann nach bekannten Verfahren erfolgen. Ein besonders geeignetes Verfahren umfasst die Schritte des Anspruchs 12.

Dabei werden die Ausgangsmaterialien für die einzelnen Schichten zunächst in verschiedenen Extrudern aufgeschmolzen und plastifiziert. Die jeweiligen Polymerschmelzen werden dann einer ringförmigen Coextrusionsdüse zugeführt. Der bei der Extrusion entstandene sogenannten Primärschlauch wird dann unter intensiver Kühlung verfestigt. Anschließend wird er wieder auf eine zur Verstreckung erforderlicheTemperatur erwärmt. Die Verstreckung selbst erfolgt allgemein durch die Wirkung eines unter Druck stehenden Gases (z.B. Luft) im Inneren des Schlauches. In Maschinenrichtung (= Längsrichtung) kann die Dehnung durch entsprechend eingestellte Walzenpaare unterstützt werden. Der verstreckte Schlauch wird dann üblicherweise noch thermofixiert. Durch die Thermofixierung wird die Dimensionsstabilität des Schlauches verbessert.

Verwendet wird die erfindungsgemäße Nahrungsmittelhülle insbesondere als künstliche Wursthülle, speziell für Koch- und Brühwürste, die lange Lagerzeiten überdauern sollen, ferner z. B. zur Verpackung von Käse oder Tiernahrung.

Die nachfolgenden Beispiele erläutern die Erfindung. Angaben über die Zusammensetzung der einzelnen Schichten in Prozenten beziehen sich auf Gewichtsprozente.

Die Wasserdampfdurchlässigkeit wurde gemäß DIN 53122 auf gravimetrischem Weg bei einer H₂O-Partialdruckdifferenz von 85 % zu 0 % und einer Temperatur von 23 °C bestimmt.

Die Sauerstoffdurchlässigkeit wurde gemäß DIN 53380 mit dem Gerät ®Oxtran 10 der Firma Mocon bei 53 % relativer Feuchte und 23 °C bestimmt.

Die Wursthüllen wurden auch unter Praxisbedingungen getestet. Dazu wurden die Hüllen abschnittweise 30 min lang gewässert und anschließend mit feinkörnigem Kalbsleberwurst-Brät gefüllt. Die Würste wurden dann in einem Gegendruck-Dampfautoklaven 60 min lang bei einer Temperatur von 115 °C gebrüht und sterilisiert. Nach dem Abkühlen wurden sie in einem Kühlraum bei 6 °C über eine in der folgenden Tabelle angegebene Zeitspanne gelagert. Nach Ablauf der Lagerzeit wurden die Würste angeschnitten. Ein Teil der Hülle wurde vorsichtig abgezogen und die Farbe der Brätoberfläche wurde im Vergleich zu einer frisch gefüllten Wurst beurteilt.

### Beispiel 1:

Es wurde ein vierschichtiger Primärschlauch durch Coextrusion hergestellt mit
a) einer äußeren Schicht aus 70 % Polyamid 6/66 (®Ultramid C4 der BASF AG), gemischt mit 30 % Nylon-MXD6 (Nylon MX 6007 der Mitsubishi Gas Chem.)
b) einer zentralen Schicht aus 80 % eines EthylenNinylalkohol-Copolymers mit 32 mol-% Ethylen-Einheiten und 68 mol-% Vinylalkohol-Einheiten (®Soarnol DC der Firma Nippon Gohsei), vermischt mit 20 % Polyamid 6/69 (®Grilon CF62BS der Ems-Chemie),
c) einer zentralen Schicht aus mit Maleinsäureanhydrid gepfropftem linearem Polyethylen niedriger Dichte (gepfropftes LLDPE = ®Escor CTR 2000 der Exxon Ltd.) und
d) einer inneren Schicht aus Polyamid 6/66 (®Ultramid C4 der BASF AG). Der Primärschlauch wurde schnell auf etwa 15 °C abgekühlt, anschließend auf etwa 90 °C erwärmt und bei dieser Temperatur biaxial verstreckt. Das Flächenstreckverhältnis betrug 9,1 : 1. Eine Thermofixierung schloss sich an, bei der der Schlauch zunächst mit einem Walzenpaar luftdicht abgequetscht, dann erneut aufgeblasen, durch eine Wärmekammer hindurchgeführt und schließlich wieder abgequetscht wurde. Der Durchmesser des thermofixierten Schlauches betrug 45 mm bei einer Wandstärke von 45 µm. Die Schicht a) hatte daran einen Anteil von 25 um, die Schicht b) von 7 µm, die Schicht c) von 8 um und die Schicht d) von 5 µm. Die Eigenschaften des Schlauches sind in der Tabelle zusammengestellt.

### Beispiel 2:

Wie im Beispiel 1 beschrieben, wurde ein biaxial verstreckter, thermofixierter vierschichtiger Schlauch mit einem Durchmesser von 45 mm und einer Wandstärke von 50 um hergestellt.

Die äußere Schicht a) bestand aus 60 % Polyamid-6/66, 30 % Nylon MXD6 und 10 % Polyamid-6I/6T (®Selar PA 3426 der DuPont) und hatte eine Dicke von 25 um. Die zentrale Schicht b) bestand aus 50 % des im Beispiel 1 genannten EthylenNinylalkohol-Copolymers, vermischt mit 50 % des ebenfalls im Beispiel 1 genannten Polyamids 6/69, und hatte eine Dicke von 12 µm. Die olefinische Schicht c) wie auch die innere Polyamidschicht d) hatten die gleiche Dicke und bestanden aus dem gleichen Material wie die Schichten c) und d) im Beispiel 1.

### Beispiel 3:

Analog zu Beispiel 1 wurde ein biaxial verstreckter, thermofixierter, fünfschichtiger Schlauch mit einem Durchmesser von 45 mm und einer Wandstärke von 50 µm hergestellt. Die äußere Schicht a), die olefinische Schicht c) wie auch die innere Polyamidschicht d) hatten dabei die gleiche Zusammensetzung und Dicke wie die Schichten a), c) und d) im Beispiel 2. Die Schicht b) wiederum hatte die gleiche Zusammensetzung und Dicke wie die Schicht b) im Beispiel 1.

Zwischen der äußeren Polyamidschicht a) und der zentralen Schicht b) lag jedoch noch eine weitere olefinische Schicht c) gleicher Zusammensetzung wie die erste Schicht c), diese hatte allerdings nur eine Dicke von 5 um.

### Vergleichsbeispiel V1:

Wie im Beispiel 1 beschrieben, wurde eine biaxial verstreckte, thermofixierte, vierschichtige, schlauchförmige Hülle mit einem Durchmesser von 45 mm und einer Wandstärke von 45 µm hergestellt. Die polyolefinische Schicht c) und die innere Polyamidschicht d) hatten die gleiche Zusammensetzung und Dicke wie die Schichten c) und d) im Beispiel 1. Die äußere Polyamidschicht a) bestand jedoch allein aus Polyamid 6/66 (®Ultramid C4 der BASF AG); ihre Dicke betrug 25 µm. Die zwischen den Schichten a) und c) angeordnete Schicht b) bestand aus dem Ethylen-Vinylalkohol-Copolymer gemäß Beispiel 1 und hatte eine Dicke von 7 µm.

### Vergleichsbeispiel V 2:

Analog zu Beispiel 1 wurde eine biaxial verstreckte, thermofixierte, dreischichtige, schlauchförmige Hülle mit einem Durchmesser von 45 mm und einer Wandstärke von 45 µm hergestellt. Die äußere und die innere Schicht bestand jeweils aus Polyamid-6/66 und hatte eine Dicke von 30 um, bzw. 5 um. Die zentrale Schicht bestand aus dem im Beispiel 1 genannten gepfropften Polyethylen und hatte eine Dicke von 10 µm.

**Tabelle**

| Beispiel | Wasserdampfdurchlässigkeit [g/m² d] | Sauerstoffdurchlässigkeit [cm³/m² d bar] | visuelle Bewertung der Farbe der Brätoberfläche nach | |
|---|---|---|---|---|
| | | | 4 Wochen | 12 Wochen |
| 1 | 4,7 | 5,3 | 0 | 0 |
| 2 | 4,6 | 5,1 | 0 | 0 |
| 3 | 3,2 | 3,2 | 0 | 0 |
| V1 | 4,8 | 0,9 | 1 | 1 |
| V2 | 3,8 | 15,3 | 1 | 2 |

Bei der Bewertung der Farbe der Brätoberfläche nach den jeweiligen Lagerzeiten bedeutet:
0 = keine erkennbare Grauverfärbung
1 = leichte Grauverfärbung
2 = starke Grauverfärbung

## Patentansprüche

1. Mindestens vierschichtige, schlauchförmige, biaxial verstreckte Nahrungsmittelhülle mit
a) einer äußeren Schicht, die im wesentlichen aus einer Mischung aus jeweils mindestens einem aliphatischen und einem teilaromatischen (Co-)-Polyamid und gegebenenfalls Pigmenten besteht, und
b) einer Schicht, die ein Ethylen/Vinylalkohol-Copolymer enthält und zwischen der äußeren und der inneren Schicht angeordnet ist,
c) einer Schicht, die im wesentlichen aus einem olefinischen (Co-)Polymer und gegebenenfalls Haftvermittlern, Pigmenten und/oder UV-Absorbern besteht und zwischen der inneren und der äußeren Schicht angeordnet ist, und
d) einer inneren Schicht, die im wesentlichen aus aliphatischem (Co-)-Polyamid besteht,
**dadurch gekennzeichnet, daß** das Ethylen/Vinylalkohol-Copolymer der Schicht b) abgemischt ist mit einem aliphatischen oder teilaromatischen (Co-)Polyamid, einem olefinischen (Co-)Polymer und/oder einem lonomerharz.

2. Nahrungsmittelhülle gemäß Anspruch 1, **dadurch gekennzeichnet, daß** der Anteil an aliphatischem (Co-)Polyamid in der äußeren Schicht a) 40 bis 95 Gew.-%, bevorzugt 60 bis 90 Gew.-%, jeweils bezogen auf das Gesamtgewicht der Schicht, beträgt.

3. Nahrungsmittelhülle gemäß Anspruch 1 oder 2, **dadurch gekennzeichnet, dass** die Dicke der äußeren Schicht a) 12 bis 30 µm, bevorzugt 15 bis 25 µm, beträgt.

4. Nahrungsmittelhülle gemäß einem oder mehreren der Ansprüche 1 bis 3, **dadurch gekennzeichnet, dass** das Ethylen/Vinylalkohol-Copolymer Schicht b) aus 29 bis 47 mol-% Ethylen-Einheiten und 71 bis 53 mol-% Vinylalkohol-Einheiten besteht.

5. Nahrungsmittelhülle gemäß einem oder mehreren der Ansprüche 1 bis 4, **dadurch gekennzeichnet, dass** die Schicht b) aus 30 bis 90 Gew.-% mindestens eines Ethylen/Vinylalkohol-Copolymers und 70 bis 10 Gew.-% mindestens eines aliphatischen und/oder eines teilaromatischen (Co-)Polyamids besteht.

6. Nahrungsmittelhülle gemäß einem oder mehreren der Ansprüche 1 bis 5, **dadurch gekennzeichnet, dass** die Dicke der Schicht b) 3 bis 15 µm, bevorzugt von 6 bis 12 um, beträgt.

7. Nahrungsmittelhülle gemäß einem oder mehreren der Ansprüche 1 bis 6, **dadurch gekennzeichnet, dass** die polyolefinische Schicht c) aus Polyethylen, Polypropylen und/oder Ethylen/Propylen-Copolymeren besteht.

8. Nahrungsmittelhülle gemäß einem oder mehreren der Ansprüche 1 bis 7, **dadurch gekennzeichnet, dass** die Dicke der olefinischen Schicht(en) c) (jeweils) 5 bis 20 µm, bevorzugt bei 8 bis 12 µm, beträgt.

9. Nahrungsmittelhülle gemäß einem oder mehreren der Ansprüche 1 bis 8, **dadurch gekennzeichnet, dass** die Dicke der inneren Schicht d) 4 bis 15 µm, bevorzugt 5 bis 10 µm, beträgt.

10. Nahrungsmittelhülle gemäß einem oder mehreren der Ansprüche 1 bis 9, **dadurch gekennzeichnet, dass** sie fünfschichtig ist und jeweils eine olefinische Schicht c) zwischen der Schicht b) und der äußeren Schicht a) bzw. der inneren Schicht d) aufweist.

11. Nahrungsmittelhülle gemäß einem oder mehreren der Ansprüche 1 bis 10, **dadurch gekennzeichnet, dass** sie thermofixiert ist.

12. Verfahren zur Herstellung einer mindestens vierschichtigen, schlauchförmigen, biaxial verstreckten Nahrungsmittelhülle mit
a) einer äußeren Schicht, die im wesentlichen aus einer Mischung aus jeweils mindestens einem aliphatischen und einem teilaromatischen (Co-)-Polyamid und gegebenenfalls Pigmenten besteht, und
b) einer Schicht, die ein EthylenNinylalkohol-Copolymer enthält und zwischen der äußeren und der inneren Schicht angeordnet ist,
c) einer Schicht, die im wesentlichen aus einem olefinischen (Co-)Polymer und gegebenenfalls Haftvermittlern, Pigmenten und/oder UV-Absorbern besteht und zwischen der inneren und der äußeren Schicht angeordnet ist, und
d) einer inneren Schicht, die im wesentlichen aus aliphatischem (Co-)-Polyamid besteht,
umfassend die Schritte
- Extrudieren der einzelnen Schichten durch eine ringförmige Coextrusionsdüse zu einem mehrschichtigen Primärschlauch,
- Abkühlen und Verfestigen des Primärschlauches,
- Erwärmen des Primärschlauches auf eine zur Verstreckung erforderliche Temperatur,
- Verstrecken des Primärschlauches in Längs- und Querrichtung bei dieser Temperatur und gegebenenfalls
- Thermofixieren des verstreckten Schlauches
**dadurch gekennzeichnet, daß** das EthylenNinylalkohol-Copolymer der Schicht b) abgemischt ist mit einem aliphatischen oder teilaromatischen (Co-)Polyamid, einem olefinischen (Co-)Polymer und/oder einem lonomerharz.

13. Verwendung der Nahrungsmittelhülle gemäß einem oder mehreren der Ansprüche 1 bis 11 als künstliche Wursthülle oder zur Verpackung von Käse und Tiernahrung.

## Claims

1. An at least four-layer tubular biaxially oriented food casing comprising
a) an outer layer which essentially consists of a mixture of in each case at least one aliphatic and one partly aromatic (co)polyamide with or without pigments, and
b) a layer comprising an ethylene/vinyl alcohol copolymer, which is arranged between the inner and the outer layer,
c) a layer which essentially consists of an olefinic (co)polymer with or without adhesion promotors, pigments and/or UV absorbers, and which is arranged between the inner and the outer layer,
d) an inner layer which essentially consists of aliphatic (co)polyamide,
wherein the ethylene/vinyl alcohol copolymer of the layer b) is admixed with an aliphatic or partly aromatic (co)polyamide, an olefinic (co)polymer and/or an ionomer resin.

2. The food casing as claimed in claim 1, wherein the content of aliphatic (co)polyamide in the outer layer a) is 40 to 95% by weight, preferably 60 to 90% by weight, in each case based on the total weight of the layer.

3. The food casing as claimed in claim 1 or 2, wherein the thickness of the outer layer a) is 12 to 30 µm, preferably 15 to 25 µm.

4. The food casing as claimed in one or more of claims 1 to 3, wherein the ethylene/vinyl alcohol copolymer of layer b) consists of 29 to 47 mol% of ethylene units and 71 to 53 mol% of vinyl alcohol units.

5. The food casing as claimed in one or more of claims 1 to 4, wherein the layer b) consists of 30 to 90% by weight of at least one ethylene/vinyl alcohol copolymer and 70 to 10% by weight of at least one aliphatic and/or one partly aromatic (co)polyamide.

6. The food casing as claimed in one or more of claims 1 to 5, wherein the thickness of the layer b) is 3 to 15 µm, preferably 6 to 12 µm.

7. The food casing as claimed in one or more of claims 1 to 6, wherein the polyolefinic layer c) consists of polyethylene, polypropylene and/or ethylene/propylene copolymers.

8. The food casing as claimed in one or more of claims 1 to 7, wherein the thickness of the olefinic layer(s) c) is (in each case) 5 to 20 µm, preferably 8 to 12 µm.

9. The food casing as claimed in one or more of claims 1 to 8, wherein the thickness of the inner layer d) is 4 to 15 µm, preferably 5 to 10 µm.

10. The food casing as claimed in one or more of claims 1 to 9, wherein it is five-layered and has one olefinic layer c) in each case between the layer b) and the outer layer a) and between the layer b) and the inner layer d).

11. The food casing as claimed in one or more of claims 1 to 10, wherein it is heat-set.

12. A process for producing an at least four-layer tubular biaxially oriented food casing comprising
a) an outer layer which essentially consists of a mixture of in each case at least one aliphatic and one partly aromatic (co)polyamide with or without pigments, and
b) a layer comprising an ethylene/vinyl alcohol copolymer, which is arranged between the inner and the outer layer,
c) a layer which essentially consists of an olefinic (co)polymer with or without adhesion promoters, pigments and/or UV absorbers, and which is arranged between the inner and the outer layer,
d) an inner layer which essentially consists of aliphatic (co)polyamide,
comprising the steps of
- extruding the individual layers through an annular coextrusion die to form a multilayer primary tube,
- cooling and solidifying the primary tube,
- heating the primary tube to a temperature required for orientation,
- orienting the primary tube in the longitudinal and transverse direction at this temperature and, if appropriate,
- heat-setting the oriented tube
wherein the ethylene/vinyl alcohol copolymer of the layer b) is admixed with an aliphatic or partly aromatic (co)polyamide, an olefinic (co)polymer and/or an ionomer resin.

13. The use of the food casing as claimed in one or more of claims 1 to 11 as synthetic sausage casing or for packaging cheese and animal feed.

## Revendications

1. Enveloppe pour denrées alimentaires orientée biaxialement, en forme de tube, formée par au moins quatre couches, comprenant
a) une couche externe, qui est formée sensiblement par un mélange contenant au moins un (co-)polyamide aliphatique et au moins un (co-)polyamide partiellement aromatique et, le cas échéant, des pigments, et
b) une couche, qui contient un copolymère éthylène-alcool vinylique et est disposée entre la couche externe et la couche interne,
c) une couche, qui est formée sensiblement par un (co-)polymère oléfinique ci, le cas échéant, des agents adhésifs, des pigments et/ou des absorbeurs de rayons UV et qui est disposée entre la couche interne et la couche externe, et
d) une couche interne, qui est formée sensiblement par un (co-)polyamide aliphatique,
**caractérisée en ce que** le copolymère éthylène-alcool vinylique de la couche b) est mélangé à un (co-) polyamide aliphatique ou partiellement aromatique, un (co-)polymère oléfinique et/ou une résine ionomère.

2. Enveloppe pour denrées alimentaires selon la revendication 1, **caractérisée en ce que** la teneur en (co-)polyamide aliphatique dans la couche externe a) est de 40 à 95 % en poids, de préférence 60 à 90 % en poids, respectivement par rapport au poids total de la couche.

3. Enveloppe pour denrées alimentaires selon la revendication 1 ou 2, **caractérisée en ce que** l'épaisseur de la couche externe a) est égale à 12 à 30 µm, de préférence 15 à 25 µm.

4. Enveloppe pour denrées alimentaires selon une ou plusieurs des revendications 1 à 3, **caractérisée en ce que** le copolymère éthylène-alcool vinylique de la couche b) contient 29 à 47 % en moles d'unités éthylène et 71 à 53 % en moles d'unités alcool vinylique.

5. Enveloppe pour denrées alimentaires selon une ou plusieurs des revendications 1 à 4, **caractérisée en ce que** la couche b) contient 30 à 90 % en poids d'au moins un copolymère éthylène-alcool vinylique et 70 à 10 % en poids d'au moins un (co-)polyamide aliphatique et/ou d'au moins un (co-)polyamide partiellement aromatique.

6. Enveloppe pour denrées alimentaires selon une ou plusieurs des revendications 1 à 5, **caractérisée en ce que** l'épaisseur de la couche b) est égale à 3 à 15 µm, de préférence 6 à 12 µm.

7. Enveloppe pour denrées alimentaires selon une ou plusieurs des revendications 1 à 6, **caractérisée en ce que** la couche polyoléfinique c) est formée par du polyéthylène, polypropylène et/ou des copolymères éthylène-propylène.

8. Enveloppe pour denrées alimentaires selon une ou plusieurs des revendications 1 à 7, **caractérisée en ce que** l'épaisseur de la/des couche(s) oléfinique(s) c) est égale (pour chacune) à 5 à 20 µm, de préférence 8 à 12 µm.

9. Enveloppe pour denrées alimentaires selon une ou plusieurs des revendications 1 à 8, **caractérisée en ce que** l'épaisseur de la couche interne d) est égale à 4 à 15 µm, de préférence 5 à 10 µm.

10. Enveloppe pour denrées alimentaires selon une ou plusieurs des revendications 1 à 9, **caractérisée en ce qu'**elle est formée par cinq couches et comporte respectivement une couche oléfinique c) entre la couche b) et la couche externe a) ou la couche interne d).

11. Enveloppe pour denrées alimentaires selon une ou plusieurs des revendications 1 à 10, **caractérisée en ce qu'**elle est assemblée par thermofixage.

12. Procédé de fabrication d'une enveloppe pour denrées alimentaires orientée biaxialement, en forme de tube, formée par au moins quatre couches, à savoir
a) une couche externe, qui est formée sensiblement par un mélange contenant au moins un (co-)polyamide aliphatique et au moins un (co-)polyamide partiellement aromatique et, le cas échéant, des pigments, et
b) une couche, qui contient un copolymère éthylène-alcool vinylique et est disposée entre la couche externe et la couche interne,
c) une couche, qui est formée sensiblement par un (co-)polymère oléfinique et, le cas échéant, par des agents adhésifs, des pigments et/ou des absorbeurs de rayons UV et qui est disposée entre la couche interne et la couche exteme, et
d) une couche interne, qui est formée sensiblement par un (co-)polyamide aliphatique,
comprenant les étapes suivantes :
- extrusion des différentes couches par une buse annulaire pour extrusion en couches multiples en vue d'obtenir un tube primaire multicouche,
- refroidissement et consolidation du tube primaire,
- chauffage du tube primaire à une température nécessaire pour l'étirage,
- étirage du tube primaire à cette température, dans le sens longitudinal et transversal et, le cas échéant,
- thermofixage du tube étiré,
**caractérisé en ce que** le copolymère éthylène-alcool vinylique de la couche b) est mélangé à un (co-) polyamide aliphatique ou partiellement aromatique, un (co-)polymère oléfinique et/ou une résine ionomère.

13. Utilisation de l'enveloppe pour denrées alimentaires selon une ou plusieurs des revendications 1 à 11 pour former un boyau artificiel pour saucisse ou pour l'emballage de fromage et d'aliments pour animaux.
